Europäisches Patentamt

European Patent Office

Office européen des brevets

(11) Publication number: **0 342 734**

**A2**

## EUROPEAN PATENT APPLICATION

(21) Application number: **89201171.9**

(51) Int. Cl.⁴: **H01G 1/02**

(22) Date of filing: **09.05.89**

(30) Priority: **20.05.88 SE 8801887**

(43) Date of publication of application:
**23.11.89 Bulletin 89/47**

(84) Designated Contracting States:
**DE FR GB IT**

(71) Applicant: **RIFA AB**
**Box 945**
**S-391 29 KALMAR(SE)**

(72) Inventor: **Radszuweit, Reinhold**
**8355 Källstorpsmala**
**S-388 04 Trekanten(SE)**

(74) Representative: **Nydell, Peder**
**Nydells Patentbyra Storgatan 57**
**S-392 31 Kalmar(SE)**

(54) **An insulating cover lid for an electrically conductive casing.**

(57) An insulated cover lid for an electrically conductive casing (11), in which electrical components (12)
are encapsulated. The lid (10) has at least two
contact means (18) to be connected to an external
circuit. In order to increase the creepage distances,
the lid (10) is provided with a projection (31) of
insulating material in the form of a partition wall
between the contact means (18), and is also pro-
vided with two heels (32) of insulating material, in
which the contact means (18) are secured. The
partition wall (31) extends all the way to the heels
(32) to form a tight sealing therewith.

FIG. 1

EP 0 342 734 A2

## TECHNICAL FIELD

The present invention relates to an insulating cover lid for an electrically conductive casing in which at least one electrical component, for instance an electrical capacitor, is encapsulated, the lid having on its outer surface at least two contact means which are electrically connected to the component and adapted to connect the component to an external circuit.

BACKGROUND PRIOR ART

With such known cover lids there is a risk that so-called creepage currents, i.e. surface leakage currents, may occur, which "creep" along the surface of the insulated lid through the electrically conducting moisture or dirt that may be present there. There is an increased risk that such creepage currents will occur if the creepage distance is reduced. The expression "creepage distance means the shortest distance between two conducting elements that any creepage current has to travel along an insulated surface. Creepage currents are more likely to occur in high power capacitors which work with high voltages.

This problem has been solved in known capacitors, for instance General Electric type 2316134, by placing a sink of insulating material around the terminal contacts. This construction is, however, disadvantageous since condense water may easily be accumulated in these sinks, thereby destroying the insulation.

SUMMARY OF THE INVENTION

The object of the invention is to provide a cover lid of the aforementioned kind, where any possibility of creepage currents has been substantially reduced and where the risk for any accumulation of condense water has been eliminated. This object is achieved by a cover lid in accordance with the present invention having the characteristic features set forth in claim 1.

Further developments of the invention are apparent from the depending claims.

BRIEF DESCRIPTION OF THE DRAWINGS

The invention will be described in more detail with reference to the accompanying drawings, which illustrate a preferred embodiment of the invention.

Fig. 1 is a plan view seen from above of a cover lid in accordance with the invention.

Fig. 2 is a central longitudinal cross-section taken along the line II-II of Fig. 1.

DESCRIPTION OF A PREFERRED EMBODIMENT

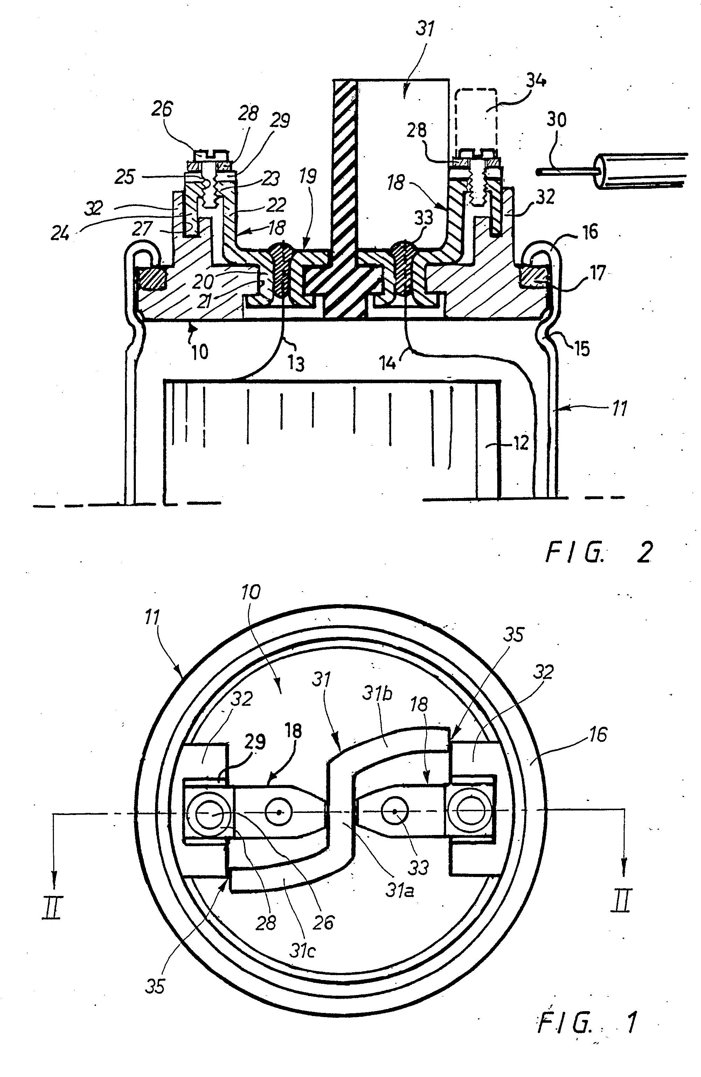

Figs. 1 and 2 illustrate a circular cover lid 10 of an insulating material, for instance bakelite or a plastic. The cover lid closes the open end of an electrically conducting casing 11, which forms an encapsulation for at least one electrical component, preferably an electrical capacitor 12, which is provided with terminal lead wires 13, 14. The cover lid 10 rests against an impression 15 and is retained there because the edge 16 of the encapsulation 11 is bent around a sealing ring 17, against which the bent edge 16 rests and ensures a hermetic sealing.

The cover lid 10 has two mutually identically alike contact means 18, which are oriented facing each other in a mirror-like fashion. Each contact means 18 consists of a metallic strip, one end 19 of which is extended to form a tube rivet 20 which is secured in a hole 21 extending through the cover lid 10. The terminal lead wires 13, 14 are brought into the tube rivets 20 and are soldered to a fix position therein by a solder 33. This operation may be performed after assembling the lid 10 and securing it in the casing 11.

Before the solder 33 is applied, the openings of the tube rivets 20 may be used to fill the casing 11 with oil with any known method.

The other end of the contact means 18 is U-bent and has a portion 22 extending upwardly from the portion 19, and a substantially plane portion 23 extending in parallel with the lid 10, and a portion 24 extending downwardly. The portion 23 is provided with a threaded hole 25 for a fastening screw 26. The downwardly extending portion 24 co-acts with a locking groove 27 in the lid. Thereby, the contact means will be locked against rotary forces that will arise when tightening the screw 26.

The portion 23 is suitably provided with folded-up ears 29 in order to hold in place a clamping disc 28 for a terminal lead 30 to be connected to an external circuit, not shown. It is possible to lengthen one or both of these ears 29 such (see dotted line 34) that it is possible to alternatively connect so-called plane-plug contacts.

The lid 10 is provided with a central projection of an insulating material in the form of a partition wall 31 located between the contact means 18, and two further projections in the form of heels 32 located near the periphery of the lid 10, the two further projections being located diametrically opposed at a respective side of the partition wall 31. The contact means 18 are secured to a respective heel 32 by means of said groove 27 which is formed in the heel 32. The partition wall 31 is provided with a central portion 31a extending substantially at right angle to an imagined line between the contact means 18, and is also provided with two end portions 31b, c, extending in opposite directions from the central portion 31a in a respective curved path all the way to a respective heel 32 to form a tight sealing therewith (at 35). The curved portions 31b, c may alternatively be non- curved and extend rectilinearly all the way to the respective heel 32. However, the embodiment with curved portions 31b, c is preferred, since it improves the accessibility of the contact means 18 when soldering the tube rivet 20.

By thus giving the partition wall 31 a S- or Z-shaped form, any possible contact rails of the contact means will be spaced far from each other, which also reduces any risk for the possibility of creepage currents and short circuit. The partition wall 31 should suitably be of a height being at least as great as the creepage distance between the contact means 18 and the edge 16 of the casing 11. Suitably, the height of the partition wall 31 should be higher than the highest portions of the contact means 18.

The partition wall 31 and the heels 32 may be manufactured as separate parts which are glued against the lid 10. They may alternatively be manufactured integrally with the lid.

## Claims

1. An insulated cover lid for an electrically conductive casing (11) in which at least one electrical component, for instance an electrical capacitor (12), is encapsulated, the lid (10) having on its outer surface at least two contact means (18) which are electrically connected to the component and adapted to connect the component to an external circuit, **characterized** in that, for the purpose of increasing the creepage distance between the contact means (18) themselves and between the contact means and the casing (11), the lid (10) has a projection of insulating material in the form of a partition wall (31) between the contact means, the lid also having two further projections (32) of insulating material, the contact means (18) being secured in a respective one of said further projections, the partition wall (31) extending all the way to said further projections (32) to form a tight sealing with each one of said further projections, so that no creepage currents can pass between the partition wall and said further projections.

2. A cover lid according to claim 1, **characterized** in that the partition wall (31) has a central portion (31a) extending substantially at right angle to an imagined line between the contact means (18), the partition wall also having two end portions (31b, c) extending in opposite directions from the central portion (31a) substantially rectilinearly or, alternatively, in a curved path all the way to a respective one of said further projections (32) to form said tight sealing therewith.

3. A cover lid according to any of the claims 1 - 2, **characterized** in that the lid has a circular shape and that the contact means (18) are located diametrically opposed on the outer surface of the lid (10).

F I G. 2

F I G. 1